Europäisches Patentamt

**European Patent Office**

**Office européen des brevets**

(11) Veröffentlichungsnummer: **0 197 304**
**B1**

(12) **EUROPÄISCHE PATENTSCHRIFT**

(45) Veröffentlichungstag der Patentschrift:
**17.01.90**

(21) Anmeldenummer: **86102953.6**

(22) Anmeldetag: **06.03.86**

(51) Int. Cl.⁴:**H 04 Q 3/58, H 04 Q 3/54**

(54) Schaltungsanordnung für Fernmeldevermittlungsanlagen, insbesondere Fernsprechvermittlungsanlagen, mit an Vermittlungsstellen über Verbindungskanäle angeschlossenen Untervermittlungsstellen, insbesondere Konzentratoren.

(30) Priorität: **03.04.85 DE 3512273**

(43) Veröffentlichungstag der Anmeldung:
**15.10.86 Patentblatt 86/42**

(45) Bekanntmachung des Hinweises auf die Patenterteilung:
**17.01.90 Patentblatt 90/03**

㉄ Bennante Vertragsstaaten:
**AT BE CH DE FR GB IT LI NL SE**

(56) Entgegenhaltungen:
**US-A-4 099 235**

**NTC'77 CONFERENCE RECORD, Band 3, 5. - 7. Dezember 1977, Seiten 39:5-1 - 39:5-7, IEEE, New York, US; C.G. SVALA: "DSS-1, a digital local switching system with remote line switches"**

**ELECTRICAL COMMUNICATION, Band 59, Nr. 1/2, 1985, Seiten 74-79, Harlow, GB; G. MORALES ANDRES et al.: "System 12 - Traffic overload control"**

**INTERNATIONAL SWITCHING SYMPOSIUM, 25. - 29. Oktober 1976, Seiten 223-4-1 - 223-4-8, Kyoto, JP; N.J. SKAPERDA et al.: "Generic digital switching system"**

(73) Patentinhaber: **Siemens Aktiengesellschaft Wittelsbacherplatz 2 D-8000 München 2 (DE)**

(72) Erfinder: **Seidel, Günther, Ing. grad. August-Zeune-Weg 4 D-8000 München 70 (DE)**
Erfinder: **Übelhack, Heinrich, Ing. grad. Am Büchl 35 D-8024 Oberhaching (DE)**
Erfinder: **Homer, Russel D. Wolfratshauserstrasse 135a D-8000 München 71 (DE)**

LIBERGRAF, STOCKHOLM 1990

**Beschreibung**

Die Erfindung betrifft eine Schaltungsanordnung für Fernmeldevermittlungsanlagen, insbesondere Fernsprechvermittlungsanlagen, in denen an eine zentralgesteuerte Vermittlungsstelle wenigstens eine Untervermittlungsstelle über belegbare Verbindungskanäle jeweils zweier voneinander unabhängiger Kanalsysteme angeschlossen ist, und in denen diese Verbindungskanäle in vorgegebenen Anzahlen zu Übertragungssystemen (z. B. Trägerfrequenzsystemen, Zeitmultiplexsystemen, PCM-Systemen und dergleichen) mit jeweils einem pro System gemeinsamen Übertragungsmedium und jeweils zwei pro System gemeinsamen Endgeräten gehören, und in denen je einer der Kanäle jedes der beiden Übertragungssysteme als Steuersignalkanal verwendet ist, und in denen Teilnehmeranschlußschaltungen von an die Untervermittlungsstelle angeschlossenen Teilnehmerstellen durch jede von zwei in der betreffenden Untervermittlungsstelle vorgesehene und je einem der beiden Übertragungssysteme zugeordnete Ansteuereinrichtungen zyklisch angesteuert und sowohl auf ein Vorliegen von Wahlkennzeichen einschließlich jeweils den Beginn einer beabsichtigten Verbindungsherstellung anzeigenden Initialkennzeichen abgefragt werden, als auch Steuerbefehle erhalten.

Eine Schaltungsanordnung dieser Art ist bereits durch die deutsche Offenlegungsschrift 3 016 546 (VPA 80 P 6066) bekannt. In einer Fernsprechermittlungsanlage dieser Art ist durch die Aufteilung des gesamten Kanalpotentials, das zum Anschluß eines Konzentrators an eine übergeordnete Vermittlungsstelle vorgesehen ist, auf zwei Kanalsysteme die Möglichkeit geschaffen, daß bei Ausfall eines Kanalsystems oder des zugeordneten Prozessors für sämtliche Verbindungswünsche noch das andere Kanalsystem und der diesem zugeordnete Prozessor zur Verfügung steht. Die Erfolgs-Chance für den einzelnen Teilnehmer ist dabei zwar entsprechend verringert, aber sie ist für alle Konzentratorteilnehmer gleich groß.

Sind bei einem Konzentrator beide Kanalsysteme und beide Prozessoren intakt, so kann durch die in dem Einsatz zweier Kanalsysteme liegende Bündelteilung eine Verkehrseinschränkung verursacht werden, wenn bezüglich der Gesamtheit der Kanäle, über die ein Konzentrator mit der ihm jeweils übergeordneten Vermittlungsstelle verbunden ist, Schieflast vorliegt. In diesem Zusammenhang sei angenommen, daß die Kanäle eines der Kanalsysteme sämtlich belegt sind. Die diesem Kanalsystem entsprechende Abfrageeinrichtung hat nun auch in dieser Betriebssituation weiterhin die Teilnehmeranschlußschaltungen zyklisch abzufragen, weil in ihnen Schaltkennzeichen abrufbereit vorliegen können, die erst nach Beginn einer Verbindungsherstellung auftreten und eines Abgerufenwerdens und einer Verarbeitung bedürfen. Wird nun im Zuge dieser zyklischen Abfragevorgänge ein Initialkennzeichen erhalten, so verhindert die momentane Betriebssituation, daß dies berücksichtigt wird; es kann also nicht berücksichtigt werden, weil kein Kanal in dem betreffenden Kanalsystem mehr frei ist. Der Verbindungswunsch kann nicht erfüllt werden und der betreffende Teilnehmer muß abgewiesen werden, zum Beispiel durch Anschaltung von Besetztzeichen. Dies kann auch der Fall sein, wenn aufgrund der erwähnten Schieflast im anderen Kanalsystem noch Kanäle frei sind. Es treten also Besetztfälle auf, obwohl noch Kanäle für neue Verbindungen frei sind.

Für die Erfindung besteht die Aufgabe, in einer Schaltungsanordnung der eingangs angegebenen Art Vorkehrungen zu treffen, mit deren Hilfe auf einfache Weise eine Lastverteilung zwischen den beiden Kanalsystemen möglich wird, was besondere Bedeutung hat für den Fall, daß die Kanäle eines der beiden Kanalsysteme bereits vollständig belegt sind.

Die Erfindung löst die gestellte Aufgabe dadurch, daß die Teilnehmeranschlußschaltungen zu Mehrfachteilnehmeranschlußschaltungen mit je einem eigenen Modulprozessor zusammengefaßt sind, und daß die Modulprozessoren einzeln nacheinander von den beiden Ansteuereinrichtungen angesteuert werden, und pro Teilnehmeranschlußschaltung Initialkennzeichen sowie Wahlkennzeichen abgeben, daß bei Belegtsein sämtlicher Kanäle eines der beiden Übertragungssysteme die diesem Übertragungssystem zugeordnete Ansteuereinrichtung jedem Modulprozessor in Zusammenhang mit der Ansteuerung ein Abweisungskennzeichen überträgt, und daß bei Eintreffen eines Abweisungskennzeichens in einem Modulprozessor dieser dadurch an einer Übermittlung eines vorliegenden Initialkennzeichens gehindert ist, wohingegen Übermittlungen von Wahlkennzeichen zu jener durchführbar bleiben.

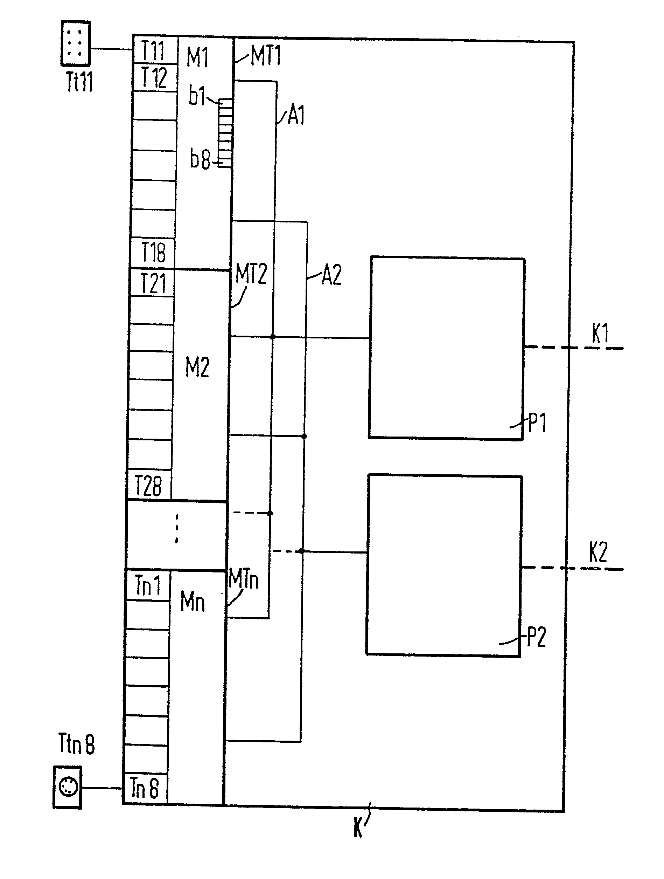

In der Zeichnung ist ein Ausführungsbeispiel der Erfindung nur in wesentlich zu ihrem Verständnis beitragenden Bestandteilen dargestellt, worauf dieselbe jedoch keineswegs beschränkt ist.

Die Beschreibung setzt Fernmeldevermittlungsanlagen, insbesondere eine Fernsprechvermittlungsanlage, als bekannt voraus, in denen an eine zentralgesteuerte Vermittlungsstelle wenigstens eine Untervermittlungsstelle über belegbare Verbindungskanäle jeweils zweier voneinander unabhängiger Kanalsysteme angeschlossen ist. Fernmeldevermittlungsanlagen dieser Art, bei der die Untervermittlungsstellen Konzentratoren sind, beschreiben die deutschen Patent-schriften 3 016 511 und 3 016 547, sowie die deutschen Offenlegungsschriften 3 016 546 und 3 224 459, ferner die englischsprachige Ausgabe der Zeitschrift "telcom report" 5 (1982) No. 4 auf Seite 262 ff. In diesen Druckschriften ist dargelegt, daß die Verbindungskanäle eines Konzentrators in zwei Übertragungssystemen mit jeweils einer vorgegebenen Anzahl von Verbindungskanälen zusammengefaßt sind. Diese Übertragungssysteme sind in den bekannten Fällen PCM-Systeme. Jedoch kann es sich hierbei auch um Zeitmulti-

3

plexsysteme anderer Art sowie um Trägerfrequenzsysteme und dergleichen Systeme verschiedener bekannter Art handeln. In den bekannten Fällen weist jedes der beiden Übertragungssysteme pro Konzentrator ein pro System gemeinsames Übertragungsmedium auf, sowie jeweils zwei pro System gemeinsame Endgeräte. Je einer der Kanäle jedes der beiden Übertragungssysteme ist als Steuersignalkanal zwischen dem Konzentrator einerseits und der übergeordneten Vermittlungsstelle andererseits verwendet. Alle diese technischen Merkmale der bekannten Fernsprechvermittlungsanlagen treffen auch für die weiter unten anhand der Zeichnung noch im einzelnen beschriebene Anordnung zu.

In der Zeichnung ist lediglich ein Konzentrator auszugsweise dargestellt. Die genannten beiden Kanalsysteme K1 und K2 sind strichliert dargestellt. Sie führen zu einer übergeordneten Fernsprechvermittlungsanlage (es kann sich auch um eine Fernmeldevermittlungsanlage anderer Art, zum Beispiel eine Fernschreibvermittlungsanlage und dergleichen handeln), die in der Zeichnung nicht im einzelnen dargestellt ist sondern den genannten älteren Veröffentlichungen zu entnehmen ist. Wie aus der Zeichnung weiterhin zu entnehmen ist, ist eine Anzahl von Teilnehmerstationen Tt11 - Ttn8 an den Konzentrator K angeschlossen. Bei diesen Teilnehmerstationen kann es sich um Tastaturwahl-Teilnehmerstationen (Tt11), sowie um Nummernschalter-Teilnehmerstationen (Ttn8) handeln. Pro Teilnehmerstation ist eine Teilnehmeranschlußschaltung (T11 bis Tn8) vorgesehen. Die Teilnehmeranschlußschaltungen sind in Gruppen von acht Teilnehmeranschlußschaltungen zu Mehrfachteilnehmeranschlußschaltungen zusammengefaßt. Zum Beispiel bildet die Gruppe der Teilnehmeranschlußschaltungen T11 bis T18 eine Mehrfachteilnehmeranschlußschaltung. Entsprechendes gilt für die in der Zeichnung dargestellten weiteren Gruppen von Teilnehmeranschlußschaltungen.

Wie bereits aus den genannten älteren Veröffentlichungen zu entnehmen ist, werden die Teilnehmeranschlußschaltungen von an die Untervermittlungsstelle angeschlossenen Teilnehmerstellen durch jede von zwei in der betreffenden Untervermittlungsstelle vorgesehene und je einem der beiden Übertragungssysteme zugeordnete Ansteuereinrichtungen zyklisch angesteuert. Diese Teilnehmeranschlußschaltungen werden von den Ansteuereinrichtungen sowohl auf ein Vorliegen von Wahlkennzeichen einschließlich jeweils den Beginn einer beabsichtigten Verbindungsherstellung anzeigenden Initialkennzeichen abgefragt, als auch mit Steuerbefehlen versorgt, die sie in Zusammenhang mit entsprechenden Ansteuervorgängen erhalten. Wie auch in den bekannten Fällen, handelt es sich - wie bereits erwähnt bei der in der Zeichnung dargestellten Untervermittlungsstelle um einen Konzentrator. Die genannten Ansteuereinrichtungen sind durch Konzentratorprozessoren P1 und P2 verwirklicht. Diese stehen über die beiden voneinander unabhängigen Kanalsysteme K1 und K2 mit der

4

übergeordneten Vermittlungsstelle, das heißt mit einer in ihr vorgesehenen zentralen Steuerungseinrichtung, in bekannter Weise in Verbindung.

Wie aus der Zeichnung zu entnehmen ist, sind die Teilnehmeranschlußschaltungen T11 - Tn8 zu Mehrfachteilnehmeranschlußschaltungen von je acht Teilnehmeranschlußschaltungen zusammengefaßt. Jede Mehrfachteilnehmeanschlußschaltung, zum Beispiel T11 - T18, ist mit einem eigenen Modulprozessor, zum Beispiel M1, ausgestattet.

Der Modulprozessor, zum Beispiel M1, einer Mehrfachteilnehmeranschlußschaltung, zum Beispiel MT1, fragt in an sich bekannter Weise einzeln nacheinander die einzelnen Teilnehmeranschlußschaltungen, zum Beispiel T11 - T18, der betreffenden Mehrfachteilnehmeranschlußschaltung ab. Hierbei nimmt der Modulprozessor sämtliche Änderungen von Schaltzuständen auf jeder der Teilnehmerleitungen auf. Jeder der Modulprozessoren, zum Beispiel M1, weist einen Speicher b1 - b8 auf, der pro Teilnehmeranschlußschaltung, zum Beispiel T11, je eine Speichereinheit, zum Beispiel b1 enthält. Es sind also so viele Speichereinheiten vorgesehen, wie Teilnehmeranschlußschaltungen pro Merfachteilnehmeranschlußschaltung. Jede Speichereinheit besteht aus einer Mehrzahl von Speicherzellen. Pro Teilnehmeranschlußschaltung werden sämtliche Leitungszustände, die nacheinander auftreten, gespeichert. Ändert sich der Leitungszustand, so macht ein Vergleich jeweils eines neu ermittelten Abfrageergebnisses mit gespeicherten früheren Abfrageergebnissen die jeweilige Änderung des Leitungszutandes erkennbar. Diese Vorgänge sind an sich vielfältig bekannt. In dieser Weise ermittelt der Modulprozessor einer Mehrfachteilnehmeranschlußschaltung sämtliche pro Teilnehmeranschlußschaltung eintreffenden Schaltkennzeichen. Diese Schaltkennzeichen können Initialkennzeichen, Wahlkennzeichen und weitere Schaltkennzeichen, zum Beispiel für Facilities sein. Unter einem Initialkennzeichen ist dasjenige Schaltkennzeichen zu verstehen, welches den Beginn einer beabsichtigten Verbindungsherstellung anzeigt. Bei Teilnehmerstationen mit Schleifenimpulsgabe besteht das Initialkennzeichen zum Beispiel darin, daß die Teilnehmerleitungsschleife geschlossen wird, was auch als "Anrufsignal" oder "Teilnehmeranruf" bezeichnet wird.

Der Modulprozessor einer Mehrfachteilnehmeranschlußschaltung nimmt also eine Datenvorverarbeitung und Datenkonzentration vor, indem er aus den bei zyklisch nacheinander stattfindenden Abfragevorgängen ermittelten einzelnen Schaltzuständen jeder der Teilnehmeranschlußleitungen nach dem bekannten Prinzip des "last look" Initialkennzeichen, Wahlkennzeichen und weitere Schaltkennzeichen rekonstruiert. Diese Kennzeichen werden von einem Modulprozessor mit Hilfe der Speichereinheiten b1 - b8 gewonnen und liegen dann in entsprechenden Teilen dieser Speichereinheiten abrufbereit vor.

Die Mehrfachteilnehmeranschlußschaltungen werden von den beiden Konzentratorprozessoren P1 und P2 zyklisch nacheinander angesteuert. Eine Mehrfachteilnehmeranschlußschaltung wird zu einem Zeitpunkt immer nur von einem der beiden Konzentratorprozessoren angesteuert. Im übrigen aber arbeiten die beiden Konzentratorprozessoren unabhängig voneinander. Jeder der beiden Konzentratorprozessoren verfügt über ein eigenes Leitungssystem. Hierbei handelt es sich um die beiden Leitungssysteme A1 und A2. Jeder der beiden Konzentratorprozessoren ist also über jeweils sein Leitungssystem mit jeder der Mehrfachteilnehmeranschlußschaltungen MT1 - MTn verbunden. Jeder der beiden Konzentratorprozessoren steuert einzeln nacheinander jede der Mehrfachteilnehmeranschlußschaltungen an. Jeder der beiden Konzentratorprozessoren steht also jeweils in einem Zeitpunkt im Datenaustausch immer nur mit einer der Mehrfachteilnehmeranschlußschaltungen.

Für diese Einzelansteuerung ist jeder der Modulprozessoren M1 - Mn mit entsprechenden Anschaltemitteln ausgestattet. Die Anschaltung erfolgt in bekannter Weise durch Ansteuerung jeweils einer Mehrfachteilnehmeranschlußschaltung, zum Beispiel MT1, mittels einer ihr individuell zugeordneten Adresse. Sämtliche Mehrfachteilnehmeranschlußschaltungen haben also jeweils eine eigene Adresse. Zur Ansteuerung einer Mehrfachteilnehmeranschlußschaltung durch einen der beiden Konzentratorprozessoren gibt dieser also zunächst die Adresse über sein Leitungssystem ab, woraufhin in an sich bekannter Weise die jeweils angesteuerte Mehrfachteilnehmeranschlußschaltung dadurch reagiert, daß in ihr die genannten Anschaltemittel betätigt werden.

Hat ein Konzentratorprozessor, zum Beispiel P1, eine der Mehrfachteilnehmeranschlußschaltungen, zum Beispiel MT1, angesteuert, so fragt er damit den Modulprozessor, zum Beispiel M1 dieser Mehrfachteilnehmeranschlußschaltung auf ein Vorliegen von Initialkennzeichen, Wahlkennzeichen und weiteren Schaltkennzeichen ab. Der betreffende Modulprozessor überträgt daraufhin in ihm pro Teilnehmeranschlußschaltung gespeicherte Kennzeichen der zuvor angegebenen Art. Auf diese Weise sammelt jeder der beiden Konzentratorprozessoren bei sämtlichen Mehrfachteilnehmeranschlußschaltungen Initialkennzeichen sowie Wahlkennzeichen und Schaltkennzeichen weiterer Arten ein. In an sich bekannter und hier nicht im weiteren interessierender Weise ist dafür gesorgt, daß Initialkennzeichen, Wahlkennzeichen und weitere Schaltkennzeichen, die ein Konzentratorprozessor bereits von einer Mehrfachteilnehmeranschlußschaltung, bzw. ihren Modulprozessor abgefragt hat, nicht noch ein zweites Mal von dem anderen Konzentratorprozessor abgefragt werden. In diesem Zusammenhang kann vorgesehen werden, daß nach einer Aufnahme eines Initialkennzeichens, das von einer bestimmten Teilnehmestelle abgegeben worden ist, für die ihm zugeordnete Teilnehmeranschlußschaltung im Speicher des jeweiligen Modulprozessors gespeichert wird, an welchen der beiden Konzentratorprozessoren es weitergeleitet worden ist. Diese Speicherung erfolgt zweckmäßig in derjenigen Speichereinheit, die der betreffenden Teilnehmeranschlußschaltung innerhalb der jeweiligen Mehrfachteilnehmeranschlußschaltung zugeordnet ist. Durch diese Speicherung wird bewirkt, daß eine Teilnehmeranschlußschaltung nach Abgabe des Initialkennzeichens für die Dauer einer herzustellenden Verbindung bis zur Verbindungsauslösung jeweils einem der Konzentratorprozessoren zugeordnet ist und bleibt. Ist also ein Initialkennzeichen, das von einem bestimmten Teilnehmer abgegeben worden ist, von einem der beiden Konzentratorprozessoren übernommen worden, so werden sämtliche weiteren Wahlkennzeichen und weiteren Schaltkennzeichen auch nur von demselben Konzentratorprozessor übernommen. Die Konzentratorprozessoren geben die von den Mehrfachteilnehmeranschlußschaltungen und deren einzelnen Teilnehmeranschlußschaltungen übernommenen Initialkennzeichen, Wahlkennzeichen und weiteren Schaltkennzeichen in an sich bekannter Weise zur zentralen Steuerungseinrichtung der übergeordneten Fernsprechvermittlungsanlage weiter.

Wie sich aus der bisherigen Beschreibung ergibt, steht bei neu auftretenden Initialkennzeichen zunächst offen, von welchem der beiden Konzentratorprozessoren sie jeweils aufgenommen werden. Wie ausgeführt wurde, arbeiten die beiden Konzentratorprozessoren unabhängig voneinander. Tritt ein Initialkennzeichen seitens einer Teilnehmerstation in der ihr zugeordneten Teilnehmeranschlußschaltung neu auf und erscheint es neu in der ihr entsprechenden Speichereinheit, so wird es von demjenigen Konzentratorprozessor abgerufen und übernommen, der jeweils der erste ist, der die betreffende Mehrfachteilnehmeranschlußschaltung ansteuert. Dies ist also im wesentlichen zufallsbedingt.

Es kann nun der Fall eintreten, daß sämtliche Kanäle eines Kanalsystems, zum Beispiel des Kanalsystems K1 belegt sind. Diese Kanäle können durch bereits durchgeschaltete Verbindungen belegt sein, jedoch auch durch Verbindungen, die sich noch im Stadium der Verbindungsherstellung befinden. Es kann sich also auch um Verbindungen handeln, für die noch nicht sämtliche Ziffern einer vielstelligen Teilnehmernummer abgegeben worden sind. Für solche Verbindungen müssen also noch die erforderlichen Wahlkennzeichen übertragen werden. In dem angenommenen Beispiel hat dies also der Konzentratorprozessor P1 zu bewerkstelligen. Er hat also weiterhin Wahlkennzeichen und weitere Schaltkennzeichen von den Mehrfachteilnehmeranschlußschaltungen bzw. den ihnen zugeordneten Modulprozessoren abzufragen und zu übernehmen.

Da in dem zuvor angenommenen Funktionsbeispiel jedoch sämtliche Kanäle des Kanalsystems K1 bereits belegt sind, hätte es keinen Sinn, wenn der Konzentratorprozessor P1 in diesem Betriebszustand auch noch Initialkennzeichen abrufen und übernehmen würde. Deshalb ist vorgesehen, daß bei Belegtsein sämtlicher Kanäle eines der beiden Übertragungssysteme der dem betreffenden Übertragungssystem zugeodnete Konzentratorprozessor (P1) jedem Modulprozessor in Zusammenhang mit der Ansteuerung ein Abweisungskennzeichen überträgt. Steuert also der Konzentratorprozessor P1 zum Beispiel gerade den Modulprozessor M1 an, so fordert er damit eine Übertragung von Kennzeichen an, die in den einzelnen Speichereinheiten dieses Modulprozessors gespeichert vorliegen. Das dabei von dem betreffenden Konzentratorprozessor P1 an den betreffenden Modulprozessor M1 übertragene Abweisungskennzeichen bewirkt in diesem, daß eine Übermittlung vorliegender Initialkennzeichen an ihn verhindert ist, wohingegen Übermittlungen von Wahlkennzeichen von dem Modulprozessor zu dem Konzentratorprozessor durchfürbar bleiben. Erhält also ein Modulprozessor von einem Konzentratorprozessor ein Abweisungskennzeichen, so übermittelt er an diesen von den in seinen Speicherinheiten gespeicherten Initialkennzeichen, Wahlkennzeichen und weiteren Schalkennzeichen nur die Wahlkennzeichen und die weiteren Schalkennzeichen, nicht aber die Initialkennzeichen. Dadurch wird bewirkt, daß Neubelegungen nur über Kanäle desjenigen Kanalsystems aufgenommen werden können, in dem wenigstens noch ein Kanal frei ist. Unter einer Neubelegung ist also der Beginn einer Verbindungsherstellung zu verstehen, bei der ein Initialkennzeichen gebildet wird, und in deren Zusammenhang in dem Konzentrator von dem betreffenden Konzentratorprozessor ein freier Kanal desjenigen Kanalsystems belegt wird, das diesem Konzentratorprozessor zugeordnet ist.

K        Konzentrator
Tt11     Tastaturwahl-Teilnehmerstationen
Ttn8     Nummernscheiben-Teilnehmerstationen
T11-Tn8  Teilnehmeranschlußschaltungen
T1-Mtn   Mehrfachteilnehmeranschlußschaltungen
M1 - Mn  Modulprozessoren
b1 - b8  Speicher
A1, A2   Leitungssysteme
P1, P2   Konzentratorprozessoren
K1, K2   Kanalsysteme

**Patentansprüche**

1. Schaltungsanordnung für Fernmeldevermittlungsanlagen, insbesondere Fernsprechvermittlungsanlagen, in denen an eine zentralgesteuerte Vermittlungsstelle wenigstens eine Untervermittlungsstelle (K) über belegbare Verbindungskanäle jeweils zweier voneinander unabhängiger Kanalsysteme (K1, K2) angeschlossen ist, und in denen diese Verbindungskanäle in vorgegebenen Anzahlen zu zwei Übertragungssystemen (z. B. Trägerfrequenzsystemen, Zeitmultiplexsystemen, PCM-Systemen und dergleichen) mit jeweils einem pro System gemeinsamen Übertragungsmedium und jeweils zwei pro System gemeinsamen Endgeräten gehören, und in denen je einer der Kanäle jedes der beiden Übertragungssysteme als Steuersignalkanal verwendet ist, und in denen Teilnehmeranschlußschaltungen (T) von an die Untervermittlungstelle (K) angeschlossenen Teilnehmerstellen (Tt) durch jede von zwei in der betreffenden Untervermittlungsstelle vorgesehene und je einem der beiden Übertragungssysteme zugeordnete Ansteuereinrichtungen (P1, P2) zyklisch angesteuert und sowohl auf ein Vorliegen von Wahlkennzeichen einschließlich jeweils den Beginn einer beabsichtigten Verbindungsherstellung anzeigenden Initialkennzeichen abgefragt werden, als auch Steuerbefehle erhalten, dadurch gekennzeichnet, daß die Teilnehmeranschlußschaltungen (T) zu Mehrfachteilnehmeranschlußschaltungen (MT) mit je einem eigenen Modulprozessor (M) zusammengefaßt sind, und daß die Modulprozessoren (M) einzeln nacheinander von den beiden Ansteuereinrichtungen (P1, P2) angesteuert werden, und pro Teilnehmeranschlußschaltung (T) Initialkennzeichen sowie Wahlkennzeichen abgeben, daß bei Belegtsein sämtlicher Kanäle eines der beiden Übertragungssysteme die diesem Übertragungssystem zugeordnete Ansteuereinrichtung (P1, P2) jedem Modulprozessor (M) in Zusammenhang mit der Ansteuerung ein Abweisungskennzeichen überträgt, und daß bei Eintreffen eines Abweisungskennzeichens in einem Modulprozessor (M) dieser dadurch an einer Übermittlung eines vorliegenden Initialkennzeichens gehindert ist, wohingegen Übermittlungen von Wahlkennzeichen zu jener Ansteuereinrichtung (P1, P2) durchführbar bleiben.

2. Schaltungsanordnung nach Anspruch 1, dadurch gekennzeichnet, daß eine Mehrfachteilnehmeranschlußschaltung (MT) zu einem Zeitpunkt immer nur von einer der beiden Ansteuereinrichtungen (P1, P2) angesteuert wird, im übrigen die beiden Ansteuereinrichtungen (P1, P2) aber unabhängig voneinander arbeiten.

3. Schaltungsanordnung nach Anspruch 1, dadurch gekennzeichnet, daß nach Aufnahme eines Initialkennzeichens durch eine Ansteureinrichtung (P1, P2) in dem betreffenden Modulprozessor (M) für die jeweilige Teilnehmeranschlußschaltung (T) gespeichert wird, welche der beiden Ansteureinrichtungen (P1, P2) dieses Initialkennzeichen aufgenommen hat.

**Claims**

1. Circuit arrangement for telecommunication exchanges, especially telephone exchanges, in which at least one subexchange (K) is connected to a centrally controlled exchange via seizable connection channels of in each case two mutually independent channel systems (K1, K2), and in which these connection channels belong in predetermined numbers to two transmissions systems (e.g. carrier frequency systems, time-division multiplex systems, PCM systems and the like) with in each case one transmission medium which is common per system and in each case two terminals which are common per system, and which one each of the channels of each of the two transmission systems is used as control signal channel, and in which subscriber connection circuits (T) of extensions (Tt) connected to the subexchange (K) are cyclically activated by each of two activating devices (P1, P2) provided in the respective subexchange and allocated to one each of the two transmissions systems and are not only interrogated for the presence of dialling signals including initial signals in each case indicating the beginning of an intended call setup, but also receive control commands, characterized in that the subscriber connection circuits (T) are combined to form multiple subscriber connections (MP) each having a separate module processor (M), and that the module processors (M) are individually successively activated by the two activating devices (P1, P2) and supply initial signals and dialling signals per subscriber circuit (T), that when all channels of one of the two transmissions systems are occupied, the activating device (P1, P2) associated with this transmission system transmits to each module processor (M) a rejection signal in conjunction with the activation, and that when a rejection signal arrives at a module processor (M), the latter is as as result stopped from transmitting an initial signal present, where as transmissions of dialling signals to that activating device (P1, P2) can still be carried out.

2. Circuit arrangement according to Claim 1, characterized in that a multiple subscriber connection circuit (Mt) is invariable only activated by one of the two activating devices (P1, P2) at one time, but that, for the rest, the two devices (P1, P2) operate independently of one another.

3. Circuit arrangement according to Claim 1, characterized in that after an initial signal has been received by an activating device (P1, P2), the information about which of the two activating devices (P1, P2) has received this initial signal is stored in the relevant module processor (M) for the respective subscriber connection circuit (T).

**Revendications**

1. Montage pour des installations de télécommunications, notamment des installations de commutation téléphonique, dans lesquelles au moins un central secondaire (K) est raccordé à un central commandé de façon centralisée, par l'intermédiaire de canaux de liaison pouvant être occupés et appartenant respectivement à deux systèmes de canaux (K1, K2) indépendants l'un de l'autre, et dans lesquels ces canaux de liaison appartiennent, en des nombres prédéterminés, à deux systèmes de transmission (par exemple des systèmes à fréquences porteuses, des systèmes de multiplexage temporel, des systèmes MIC et analogues), avec un milieu respectif de transmission commun pour chaque système et deux appareils terminaux respectifs communs pour chaque système, et dans lesquelles des circuits de raccordement d'abonnés (T) sont commandés cycliquement par des postes d'abonnés (Tt), raccordés au central secondaire (K), par l'intermédiaire de chacun de deaux dispositifs de commande (P1, P2) prévus dans le central secondaire considéré et associés chacun à l'un des deux systèmes de transmission et sont interrogés en ce qui concerne l'existence d'indicatifs de sélection incluant le début respectif d'un indicatif initial indiquant l'établissement envisagé d'une liaison, et reçoivent également des ordres de commande, caractérisé par le fait que les circuits de raccordement d'abonnés (T) sont réunis de manière à former des circuits multiples de raccordement d'abonnés (MT) comportant chacun leur propre processeur modulaire, et que les processeurs modulaires (M) sont commandés individuellement et successivement par les deux dispositifs de commande (P1, P2) et délivrent, pour chaque circuit de raccordement d'abonné (T), des indicatifs initiaux ainsi que des indicatifs de sélection, que, dans le cas où tous les canaux de l'un des deux systèmes de transmission sont occupés, le dispositif de commande (P1, P2) associé à ce système de transmission transmet à chaque processeur modulaire (M), en liaison avec la commande, un indicatif de rejet, et que lors de l'arrivée d'un indicatif de rejet dans un processeur modulaire (M), ce dernier ne peut pas retransmettre un indicatif initial présent, tandis que des retransmissions d'indicatifs de sélection vers chaque dispositif de commande (P1, P2) restent possibles.

2. Montage suivant la revendication 1, caractérisé par le fait qu'un circuit multiple de raccordement d'abonnés (MT) est toujours commandé, à un instant, uniquement par l'un des deux dispositifs de commande (P1, P2) , mais que ces deux dispositifs de commande (P1, P2) opèrent indépendamment l'un de l'autre.

3. Montage suivant la revendication 1, caractérisé par le fait, qu'après la réception d'un indicatif initial par un dispositif de commande (P1, P2) situé dans le processeur modulaire considéré (M), celui des deux dispositifs de commande (P1, P2), qui a reçu cet indicatif initial, est mémorisé, pour le circuit de raccordement d'abonné (T) considéré.